# EUROPÄISCHE PATENTSCHRIFT

(11) **EP 1 095 962 B1**
(45) Veröffentlichungstag und Bekanntmachung des Hinweises auf die Patenterteilung: **29.03.2006**
(21) Anmeldenummer: 00122973.1
(22) Anmeldetag: 23.10.2000
(51) Int. Cl.: C08J 5/12, B29C 41/02, B29C 45/14, F02M 37/22, B60K 15/04, C08L 59/02

(54) **Verschweissbare Bauteile aus Polyacetal**
Weldable polyacetal components
Eléments en polyacétal soudables

(30) Priorität: 27.10.1999 DE 19951670
(43) Veröffentlichungstag der Anmeldung: 02.05.2001
(73) Patentinhaber: Ticona GmbH, 65451 Kelsterbach (DE)
(72) Erfinder: Schweitzer, Jörg, 64380 Rossdorf (DE); Reil, Frank, 64342 Seeheim (DE)

(56) Entgegenhaltungen:
- EP-A- 0 010 751
- EP-A- 0 904 919
- EP-A- 1 068 948
- WO-A-00/20204
- DE-A- 19 743 134
- DATABASE WPI Section Ch, Week 199748 Derwent Publications Ltd., London, GB; Class A17, AN 1997-521258 XP002164796 & JP 09 248851 A (POLYPLASTICS KK), 22. September 1997 (1997-09-22)
- DATABASE WPI Section Ch, Week 199948 Derwent Publications Ltd., London, GB; Class A32, AN 1999-565508 XP002164797 & JP 11 245258 A (ASAHI KASEI KOGYO KK), 14. September 1999 (1999-09-14)

## Beschreibung

Die Erfindung betrifft Kunststofformteile aus Polyacetal, insbesondere Bauteile, die in der Anwendung im Kontakt mit Kraftstoff stehen, die durch Schweißverfahren mit anderen Bauteilen aus thermoplastischem Kunststoffmaterial verbunden werden können, und deren Verwendung in Kraftstoffsystemen. Ebenso umfaßt ist ein Verfahren zur dichten Verbindung von Bauteilen aus Polyacetal, insbesondere von Bauteilen, die in der Anwendung im Kontakt mit Kraftstoff stehen, mit anderen Bauteilen aus thermoplastischem Kunststoffmaterial unter Anwendung von Schweißverfahren.

Im Zuge immer schärfer werdender Emissionsanforderungen an das Kraftstoff- und insbesondere Tanksystem in Kraftfahrzeugen werden immer mehr Komponenten, d.h. Bauteile und Baugruppen im Kraftstoffsystem, auf Materialien umgestellt, die geringere Permeabilität gegenüber den verwendeten Kraftstoffen aufweisen. Da Polyacetale hier deutlich bessere Permeationswerte aufweisen als Polyolefine werden insbesondere vermehrt Tankeinfüllstutzen aus Polyacetal (= Polyoxymethylen = POM) gefertigt. Das Tankeinfüllrohr wird dagegen nach wie vor aus einem Polyolefin, insbesondere aus Polyethylen (PE) hergestellt, welches in der Regel fluoriert wird, um die Permeabilität zu verringern.

Zur Vermeidung von Undichtigkeiten und damitverbundener Kraftstoffemission müssen beispielsweise der Tankeinfüllstutzen und das Tankeinfüllrohr absolut dicht miteinander verbunden sein. Zeitgemäße Verfahren zur Verbindung von Kunststoffteilen wie das Verschweißen mittels Laser-, Ultraschall-, oder anderer Schweißverfahren lassen sich jedoch nicht auf die Verbindung von Bauteilen aus Polyolefin und Polyacetal anwenden, da die Verschweißbarkeit von Polyacetal und Polyolefinen im allgemeinen äußerst schlecht ist. Ähnliche Probleme treten an anderen Stellen im Kraftstoffsystem auf, wo Bauteile aus Polyacetal mit Bauteilen aus einem anderen thermoplastischem Material absolut dicht verbunden werden müssen, da die Verschweißbarkeit von Polyacetalen mit anderen Thermoplasten insgesamt sehr unbefriedigend ist.

Aus EP0010751A1 sind bereits Kraftstoffleitungen aus Kunststoffverbundsystemen bekannt, wobei ein inneres Kunststoff-Wellrohr aus Polyoxymethylen oder aus thermoplastischem polyester mit einem äußeren Kunststoff-Mantelrohr aus Polyvinychlorid umhüllt ist.

Es bestand nun die Aufgabe, eine wirtschaftliche und einfach durchführbare Möglichkeit zu finden, Bauteile aus Polyacetal mit Bauteilen aus einem anderen thermoplastischen Kunststoff unter Anwendung von zeitgemäßen Schweißverfahren zu verbinden.

Diese Aufgabe wird dadurch gelöst, daß das Bauteil aus Polyacetal im Zweikomponenten-(2K)-Monosandwichverfahren mit einer Schicht aus einem thermoplastischen Material überzogen wird, das sich anschließend verschweißen läßt.

Die Erfindung betrifft daher allgemein nach dem Zweikomponenten-Monosandwichverfahren hergestellte Kunststofformteile aus Polyacetal gemäß Anspruch 1, insbesondere Bauteile, die in ihrer Anwendung im Kontakt mit Kraftstoff stehen, die auf ihrer Oberfläche ganz oder teilweise eine Beschichtung aus einem thermoplastischen Material aufweisen, das ein Polyolefin-Homopolymer, -Copolymer oder -Blend ist, und sich in einem für Kunststoffe üblichen Schweißverfahren mit anderen Bauteilen aus thermoplastischem Polyolefin verbinden lassen.

Die Erfindung betrifft in einer besonderen Ausführungsform Tankeinfüllstutzen mit einer inneren Schicht aus Polyacetal und einer äußeren Schicht aus Polyolefin hergestellt nach dem Zweikomponenten-Monosandwichverfahren.

Von der Erfindung umfaßt ist auch ein Verfahren zur dichten Verbindung von Bauteilen aus Polyacetal, insbesondere von Bauteilen, die in der Anwendung im Kontakt mit Kraftstoff stehen, mit anderen Bauteilen aus thermoplastischem Kunststoffmaterial unter Anwendung von für Kunststoffe üblichen Schweißverfahren.

Weitere Ausführungsformen der Erfindung sind in den Patentansprüchen niedergelegt.

In der Ausführungsform eines Tankeinfüllstutzens weist der Erfindungsgegenstand eine Außenschicht vorzugsweise aus einem thermoplastischen Polyolefin, besonders bevorzugt aus einem Polyethylen auf, womit insbesondere eine Verschweißbarkeit mit einem Tankeinfüllrohr aus Polyolefin, insbesondere Polyethylen gewährleistet wird. Die Innenschicht besteht wegen der besseren Permeationseigenschaften und chemischen Beständigkeit gegenüber Kraftstoffen aus Polyacetal. Die Verschweißung des Tankeinfüllstutzens mit dem Tankeinfüllrohr kann beispielsweise mittels Spiegelschweißen erfolgen, es sind aber auch andere übliche Schweißverfahren anwendbar.

Zu den möglichen Anwendungsgebieten für Formteile gemäß der Erfindung zählen insbesondere Tankeinfüllstutzen, Kraftstoffbehälter, Kraftstoffleitungen, Verbindungsstücke, Ventilkörper sowie Kraftstoffördereinheiten und Vorratsgeber. Mögliche Bauteile in Kraftstoffördereinheiten und Vorratsgebern sind beispielsweise Flansche, Schwalltöpfe, Pumpenhalter, Kraftstoffpumpen, Pumpendeckel, Filtersiebe. Diese Formteile weisen auf ihrer Außenseite ganzflächig oder nur an den zum Verschweißen vorgesehenen Verbindungsstellen eine Schicht aus dem thermoplastischen Material, vorzugsweise einem Polyolefin, insbesondere Polyethylen, auf und können wie zuvor für den Tankeinfüllstutzen beschrieben verschweißt werden. Prinzipiell lassen sich jedoch auch andere Thermoplasten, wie Polypropylen, oder Polyester wie Polyethytelenterephtalat oder Polybutylenterephtalat, Polystyrol, Styrol-Acrylnitril-Copolymerisate, Acrylate wie Polymethylrnethacrylat und seine Copolymere oder auch Polyamide verwenden. Abhängig vom Einsatzzweck können auch thermoplastische Elastomere verwandt werden. Die geeigneten Materialien selbst sind bekannt und werden zum Beispiel beschrieben in: Saechtling, Kunststoff-Taschenbuch, Hanser Verlag, 27. Ausgabe, Seiten 371 bis 523, und Seiten 576 bis 579, worauf Bezug genommen wird.

Vorteilhaft besteht die äußere Beschichtung des erfindungsgemäßen Polyacetalformteils aus einem elektrisch leitfähigen thermoplastischen Material, um den Abtransport elektrostatischer Ladungen zu ermöglichen. Vorteilhaft ist u.a. auch, wenn das elektrisch leitende Material an Engstellen, Kanten, Stegen, Ecken, des Formteils angebracht wird und einen Ladungsabtransport von derartigen Positionen ermöglicht. Die elektrische Leitfähigkeit kann beispielsweise durch einen Zusatz von Kohlenstoffasem, Metallfasem (insbesondere Stahlfasem) und/oder Leitfähigkeitsruß bewirkt werden kann.

Das die Innenschicht oder den Korpus bildende Polyacetal kann ein Polyoxymethylen-Homo- oder Copolymer sein. Vorteilhaft ist dieses insbesondere gegen Kraftstoffeinfluß stabilisiert, wie zum Beispiel beschrieben in der noch unveröffentlichten deutschen Patentanmeldung DE 19925491.5, worauf Bezug genommen wird. Im Bedarfsfall kann es zur besseren Formstabilität auch schlagzäh modifiziert werden und enthält dann in der Regel neben Polyacetal auch Polyurethanelastomere oder andere theroplastische Elastomere. Als Polyacetal eignet sich Polyoxymethylen Homo-und Copolymerisat. Bei den Polyoxymethylenen (POM), wie sie beispielsweise in der DE-A 29 47 490 beschrieben sind, handelt es sich im Allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.
Derartige POM-Homo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren. Im Rahmen der Erfindung werden POM-Copolymere bevorzugt, insbesondere solche, die neben den wiederkehrenden Einheiten -CH₂O- noch bis zu 50, vorzugsweise von 0,1 bis 20 und insbesondere 0,5 bis 10 mol-% an wiederkehrenden Einheiten 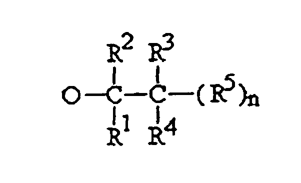 enthalten, wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 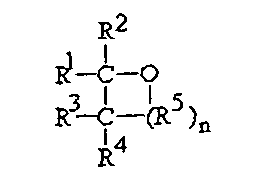 wobei R¹ bis R⁵ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.
Besonders vorteilhaft sind Copolymere aus 99,5 - 95 Mol-% Trioxan und 0,5 bis 5 mol-% einer der vorgenannten Comonomere.

Als Komponente (A) ebenfalls geeignet sind Oxymethylenterpolymerisate, die beispielsweise durch Umsetzung von Trioxan, einem der vorstehend beschriebenen cyclischen Ether und mit einem dritten Monomeren, vorzugsweise einer bifunktionellen Verbindung der Formel 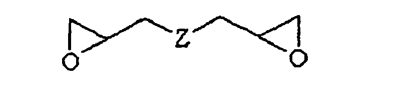 wobei Z eine chemische Bindung, -O- oder -ORO- (R=C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugten POM-Copolymere haben Schmelzpunkte von mindestens 150 °C und Molekulargewichte (Gewichtsmittelwert) M_{w} im Bereich von 5 000 bis 200 000, vorzugsweise von 7 000 bis 150 000. Endgruppenstabilisierte POM-Polymerisate, die an den Kettenenden C-C-Bindungen aufweisen, werden besonders bevorzugt.
Die eingesetzten POM-Polymere haben im allgemeinen einen Schmelzindex (MVR-Wert 190/2,16) von 2 bis 50 cm³/10 min (ISO 1133).

Sowohl das Polyacetal als auch das thermoplastische Material der Beschichtung können wahlweise übliche Stabilisatoren, Füll-, Verstärkungs- und sonstige Zusatzstoffe enthalten oder aus einer Polymermischung bestehen. Insbesondere geeignet ist zum Beispiel ein thermoplastisches Material der Beschichtung oder ein Polyacetal, welchein einer thermoplastischen Formmasse für die Beschichtung oder einer Polyacetal-Formmasse vorliegen, die eine verbesserte Haftung zum jeweiligen Partner besitzt. Eine besonders vorteilhafte thermoplastische Formmasse für die Beschichtung ist zum Beispiel in der Patentanmeldung WO 00/20204 beschrieben, worauf Bezug genommen wird.

Die Bauteile werden im Zweikomponenten-(2K)-Monosandwichverfahren hergestellt. Dieses Verfahren ist auch als Sandwich-Spritzgießen, Haut-Kem-Verfahren Co-Injection oder Combimelt bekannt. In diesem Verfahren wird in einem ersten Spritzgußschritt die Kavität der Form mit dem Material der Außenhaut teilgefüllt und anschließend die Kernkomponente, bei der vorliegenden Erfindung eine Polyacetal-Formmasse, durch die plastische Seele des eingebrachten Materials nachgespritzt. Zur Reinigung des Angusses und zum Verschließen des Bauteils mit dem Material der Außenhaut kann in einem weiteren Schritt emeut Material der Außenhaut nachgespritzt werden.

## Patentansprüche

1. Mit einem anderen Bauteil aus Polyolefin verschweißbares Kunststofformteil aus Polyacetal, **dadurch gekennzeichnet, daß** das Polyacetal auf seiner Oberfläche ganz oder teilweise eine nachdem Zweikomponenten-Monosandwichverfahren aufgetragene Beschichtung aus mindestens einem weiteren thermoplastischen Material aufweist, das ein Polyolefin-Homopolymer, -Copolymer oder -Blend ist.

2. Kunststofformteil nach Anspruch 1, in Form eines Bauteils für Anwendung im Kontakt mit Kraftstoff.

3. Kunststofformteil nach Anspruch 2 in Form eines Tankeinfüllstutzens.

4. Kunststofformteil nach einem der Ansprüche 1 bis 3, **dadurch gekennzeichnet, daß** das Polyacetal gegen Kraftstoffeinfluß stabilisiert ist.

5. Kunststofformteil nach einem der Ansprüche 1 bis 4, **dadurch gekennzeichnet, daß** die Beschichtung aus einem elektrisch leitfähigen thermoplastischen Material besteht.

6. Verfahren zur dichten Verbindung von Bauteilen aus Polyacetal mit anderen Bauteilen aus Polyolefin gemäß Anspruch 1, **dadurch gekennzeichnet, daß** das Bauteil aus Polyacetal ganz oder teilweise mit einer Beschichtung aus mindestens einem thermoplastischen Kunststoffmaterial, daß ein Polyolefin-Homopolymer, - Copolymer oder -Blend ist, unter Verwendung des Zweikomponenten-Monosandwichverfahrens versehen und unter Anwendung eines für Kunststoffe üblichen Schweißverfahrens mit dem anderen Bauteil aus Polyolefin verbunden wird, wobei die Verbindung durch ein Verschweißen der Beschichtung mit dem anderen Bauteil erfolgt.

7. Verfahren nach Anspruch 6, **dadurch gekennzeichnet, daß** das mit der Beschichtung versehene Bauteil aus Polyacetal im Zweikomponenten-Monosandwichverfahren hergestellt wird.

8. Verfahren nach einem der Ansprüche 6 oder 7, **dadurch gekennzeichnet, daß** das Polyacetal mit einem elektrisch leitfähigen thermoplastischen Kunsstoffmaterial verschweißt wird.

9. Verwendung von Kunststofformteilen gemäß einem der Ansprüche 1 bis 5 bei der Herstellung von Bauteilen, die im Kontakt mit Kraftstoffen stehen.

## Claims

1. A plastic molding made from polyacetal and weldable to another component made from polyolefin, wherein all or part of the surface of the polyacetal has a coating applied by the two-component monosandwich process and made from at least one other thermoplastic material which is a polyolefin homopolymer, polyolefin copolymer or polyolefin blend.

2. The plastic molding as claimed in claim 1, in the form of a component for use in contact with fuel.

3. The plastic molding as claimed in claim 2 in the form of a tank-filler neck.

4. The plastic molding as claimed in any of claims 1 to 3, wherein the polyacetal has been stabilized to resist the action of fuels.

5. The plastic molding as claimed in any of claims 1 to 4, wherein the coating is composed of an electrically conductive thermoplastic.

6. A process for the leakproof bonding of components made from polyacetal with other components made from polyolefin as claimed in claim 1, which comprises using the two-component monosandwich process to provide some or all of the component made from polyacetal with a coating made from at least one thermoplastic, which is a polyolefin homopolymer, polyolefin copolymer, or polyolefin blend, and using a welding process conventionally used for plastics to bond the component made from polyacetal to the other component made from polyolefin, where the bonding takes place by welding the coating to the other component.

7. The process as claimed in claim 6, wherein the component provided with the coating is produced from polyacetal by the two-component monosandwich process.

8. The process as claimed in either of claims 6 and 7, wherein the polyacetal is welded to an electrically conductive thermoplastic.

9. The use of plastic moldings as claimed in any of claims 1 to 5 in the production of components which are in contact with fuels.

## Revendications

1. Pièce de construction de forme en matière synthétique en polyacétal, soudable à une autre pièce de construction en polyoléfine, **caractérisée en ce que** le polyacétal présente, sur sa surface, complètement ou partiellement, un revêtement appliqué conformément au procédé mono-sandwich à deux composants, fait d'au moins un autre matériau thermoplastique, qui est un homopolymère, un copolymère ou un mélange de polyoléfines.

2. Pièce de construction de forme en matière synthétique selon la revendication 1, sous la forme d'une pièce de construction en vue d'une application en contact avec un carburant.

3. Pièce de construction de forme en matière synthétique selon la revendication 2, sous la forme d'une tubulure de remplissage d'un réservoir.

4. Pièce de construction de forme en matière synthétique selon l'une quelconque des revendications 1 à 3, **caractérisée en ce que** le polyacétal est stabilisé vis-à-vis de l'influence du carburant.

5. Pièce de construction de forme en matière synthétique selon l'une quelconque des revendications 1 à 4, **caractérisée en ce que** le revêtement se compose d'un matériau thermoplastique électro conducteur.

6. Procédé en vue de la liaison étanche de pièces de construction en polyacétal à d'autres pièces de construction en polyoléfine selon la revendication 1, **caractérisé en ce que** la pièce de construction en polyacétal est pourvue, complètement ou partiellement, d'un revêtement d'au moins un matériau en matière synthétique thermoplastique, qui est un homopolymère, un copolymère ou un mélange de polyoléfines, par utilisation d'un procédé mono-sandwich à deux composants et **en ce qu'**elle est liée à l'autre pièce de construction en polyoléfine par utilisation d'un procédé de soudage usuel pour les matières synthétiques, la liaison se faisant par une soudure du revêtement à l'autre pièce.

7. Procédé selon la revendication 6, **caractérisé en ce que** la pièce de construction en polyacétal pourvue du revêtement est fabriquée grâce au procédé mono-sandwich à deux composants.

8. Procédé selon la revendication 6 ou 7, **caractérisé en ce que** le polyacétal est soudé à un matériau en matière synthétique thermoplastique électro conducteur.

9. Utilisation de pièces de construction de forme en matière synthétique selon l'une quelconque des revendications 1 à 5 lors de la fabrication de pièces de construction, qui sont en contact avec des carburants.
